# EUROPEAN PATENT APPLICATION

(11) **EP 0 857 769 A1**
(43) Date of publication of application: **12.08.1998**
(21) Application number: 98300879.8
(22) Date of filing: 06.02.1998
(51) Int. Cl.: C09D 127/16

(54) **Vehicles for paints and varnishes formulated with vinylidene fluoride-hexafluoropropylene copolymers**

(30) Priority: 07.02.1997 US 39297 P; 27.01.1998 US 13790
(71) Applicant: ELF ATOCHEM NORTH AMERICA, INC., Philadelphia, Pennsylvania 19103-3222 (US)
(72) Inventor: Gaboury, Scott R., Blue Bell, PA 19422 (US); Iezzi, Robert A., West Chester, PA 19380 (US)
(74) Representative: Stoner, Gerard Patrick

(57) **Abstract**

A paint base comprising a vinylidene fluoride-hexafluoropropylene copolymer having one or more discrete vinylidene fluoride-hexafluoropropylene copolymer domains and one or more discrete vinylidene fluoride homopolymer domains including a major portion of vinylidene fluoride homopolymer domain which contains at least 50% of the vinylidene fluoride content of the polymers, paints and varnishes therefrom, coatings derived from said paints and varnishes and articles coated with said coatings are disclosed. The coatings have improved gloss, flex, crack resistance and other use properties.

## Description

This invention relates to compositions of matter classified in the art of chemistry as fluoropolymers, more specifically as heterogeneous copolymers of vinylidene fluoride (VDF) and hexafluoropropylene (HFP), to compositions containing them, more specifically to liquid coating compositions containing them, and to processes for the preparation and use of the compositions containing the fluoropolymers and for the use of the fluoropolymers themselves.

Coatings made through use of paint binders and paint vehicles formulated from polyvinylidene fluoride (PVDF) polymer resins are known to provide good solvent resistance, chemical resistance, weather resistance, heat stability, strength and resilience. It has been found that the formulation of vehicles and binders for paints and varnishes from the heterogeneous copolymers of vinylidene fluoride and hexafluoropropylene described more fully below provides coatings that when compared with coatings derived from binders formulated from PVDF homopolymers or PVDF homogeneous copolymers provide as explained in more detail hereinafter one or more of the following: equal or improved crack resistance, higher gloss, higher solvent resistance and better metal marking resistance upon annealing, while retaining excellent flexibility. The surface of the coatings as is true of coatings derived from other PVDF copolymers, has a higher fluorine content than coatings derived from binders formulated from polyvinylidene fluoride homopolymer resins. Coatings having improved weather resistance, dirt resistance and chemical resistance are described herein.

U.S. Patent 5,093,427 discloses a method of synthesis for and novel copolymers of vinylidene fluoride and hexafluoropropylene which because of the method of synthesis are believed to comprise one or more discrete vinylidene fluoride-hexafluoropropylene copolymer domains and one or more discrete vinylidene fluoride homopolymer domains including a major vinylidene fluoride homopolymer domain which contains at least about 50% of the vinylidene fluoride content of the copolymers, said copolymers having a hexafluoropropylene content of from about 1% to about 20% by weight of the copolymers which have improved melt flow and retain the high use temperature limit of vinylidene fluoride homopolymer. These copolymers are taught to be suitable for fabrication of objects having better flexibility and impact resistance. The possibility of making coatings having good or improved properties using these polymers as an ingredient for paint and varnish compositions is not suggested by this patent.

U.S. Patent 5,177,150 teaches the use of the copolymers of U.S. 5,093,427 in formulating powder coating compositions that do not require the addition of a flow-improving agent. Use of the resins in paint and varnish compositions is not suggested nor is there any indication that such use would provide coatings with good or superior properties.

There are a number of patents and publications which teach paint and varnish compositions based on polyvinylidene fluoride polymers and copolymers. See, for example, U.S. Patent 3,324,069, U.S. Patent 4,128,519, WO 93/13178 and EP 0 670 353 A2 and the references cited therein. Nothing in any of these references suggests properties associated with paint and varnish applied coatings by compositions as disclosed herein.

### DEFINITIONS

As used herein, the terms "paint base" or "paint vehicle" comprehend the combination of paint binder and thinner into which pigment is mixed to form a paint. As used herein the term "varnish" comprehends a liquid composition which is converted to a transparent solid after application as a thin layer. A paint base or paint vehicle without added pigment can be a varnish.

As used herein the terms "binder" or "paint binder" comprehend the non volatile portion of a paint base or paint vehicle. It holds pigment particles together and the paint film as a whole to the material on which it is applied.

As used herein the term "thinner" comprehends the portion of paint (or varnish) which volatilizes during the drying process. It includes any solvent (aqueous or non-aqueous).

The invention provides in a first composition aspect, a paint base or paint vehicle which comprises in an amount of from 10% to 90% by weight of the dry resin content, a vinylidene fluoride-hexafluoropropylene copolymer resin comprising one or more discrete vinylidene fluoride-hexafluoropropylene copolymer domains and one or more discrete vinylidene fluoride homopolymer domains including a major vinylidene fluoride homopolymer domain which contains at least about 50% of the vinylidene fluoride content of the copolymer, said copolymer having a hexafluoropropylene content of from about 1% to about 20% by weight of the copolymer.

The invention provides in another first composition aspect a paint base or paint vehicle which comprises in an amount of from 10% to 90% by weight of the dry resin content, a vinylidene fluoride-hexfluoropropylene copolymer preparable by the emulsion polymerization of vinylidene fluoride and hexafluoropropylene in a stirred aqueous reaction medium comprising: (a) charging to a reactor: water, vinylidene fluoride, an initiator to start the polymerization, and a water soluble surfactant capable of emulsifying both the initiator and the reaction mass during the polymerization; (b) feeding additional amounts of vinylidene fluoride and initiator to continue polymerization of the vinylidene fluoride until from about 50% to about 90% of the total weight of vinylidene fluoride utilized in the process has been added to the reaction medium; (c) adding to the reaction medium for further polymerization (i) from about 1% to about 20% hexafluoropropylene by weight, based upon the combined weight of the hexafluoropropylene and the total weight of vinylidene fluoride added to the reaction medium in the process, and (ii) the balance of the vinylidene fluoride utilized in the process; and (d) obtaining vinylidene fluoride-hexafluoropropylene copolymer.

Special mention is made of embodiments of the first composition aspect of the invention additionally comprising at least one non-fluorinated resin, especially embodiments wherein the non-fluorinated resin is an acrylic resin.

Special mention is also made of embodiments of the first composition aspect of the invention wherein the thinner for the paint base or paint vehicle is substantially non-aqueous.

Still further special mention is made of embodiments of the first composition aspect of the invention wherein the thinner for the paint base or paint vehicle is aqueous based.

The invention provides in a second composition aspect a paint comprising the paint base or paint vehicle of the first composition aspect of the invention and pigment mixed therein.

The invention provides in a third composition aspect, a coating derived by applying a paint as defined in the second composition aspect of the invention or a varnish consisting essentially of a paint base or paint vehicle as defined in the first composition aspect of the invention to a surface on which a coating is desired and evaporating the solvent contained in said paint or varnish.

The invention provides in a fourth composition aspect, an article of manufacture comprising an article having adhered on at least one surface thereof a coating as defined in the third composition aspect of the invention.

The invention provides in a process aspect, a process for applying a vinylidene fluoride-hexafluoropropylene copolymer binder containing coating on a surface which comprises applying a paint as defined in the second composition aspect of the invention or a varnish consisting essentially of a paint base or paint vehicle as defined in the first composition aspect of the invention to said surface and evaporating the thinner from said paint or varnish.

### FURTHER EXPLANATIONS; PREFERRED AND OPTIONAL FEATURES

The invention will now be generally described with reference to embodiments thereof so as to enable one of skill in the art to make and use same.

The vinylidene fluoride-hexafluoropropylene copolymers used in making the paint bases of the first composition aspect, the paints, coatings and coated articles prepared therefrom and in the processes for preparing said coatings and coated articles are readily prepared e.g. by the processes of U.S. Patent 5,093,427, the disclosure of which is hereby incorporated herein by reference.

According to conventional methods for copolymer preparation by emulsion polymerization, all of the hexafluoropropylene monomer is combined with the vinylidene fluoride monomer in an initial reaction mixture charge, or is introduced continuously in a fixed feed ratio with vinylidene fluoride. The result is uniformly random vinylidene fluoride-hexafluoropropylene copolymer. The characteristic vinylidene fluoride-hexafluoropropylene copolymers utilized in the present proposals can however be produced e.g. according to the processes of the aforementioned U.S. patent 5,093,427 by homopolymerizing an initial portion of vinylidene fluoride monomer, followed by further vinylidene fluoride polymerization with hexafluoropropylene, resulting in a polymer having discrete vinylidene fluoride homopolymer domains and a discrete vinylidene fluoride-hexafluoropropylene copolymer domain. More specifically, the process is one conducted in unstirred aqueous reaction medium and comprises: (a) charging to a reactor: water, vinylidene fluoride, an initiator to start the polymerization, and a water soluble surfactant capable of emulsifying both the initiator and the reaction mass during the polymerization; (b) feeding additional amounts of vinylidene fluoride and initiator to continue polymerization of the vinylidene fluoride until from about 50% to about 90% of the total weight of vinylidene fluoride utilized in the process has been added to the reaction medium; (c) adding to the reaction medium for further polymerization (i) from about 1% to about 20% hexafluoropropylene by weight, based upon the combined weight of the hexafluoropropylene and the total weight of vinylidene fluoride added to the reaction medium in the process, and (ii) the balance of the vinylidene fluoride utilized in the process; and (d) obtaining vinylidene fluoride-hexafluoropropylene copolymer.

Such polymers possess improved properties in general over the uniformly random vinylidene fluoride-hexafluoropropylene copolymers. Specifically, they display greater melt flow, lower flexural modulus, improved impact resistance and/or improved chemical resistance. These benefits are obtained without sacrifice to the use temperature of the polymers.

The vinylidene fluoride-hexafluoropropylene copolymers utilized in the practice of the present invention preferably have a hexafluoropropylene content, as roughly determined by the ratio of hexafluoropropylene to total monomer present in the emulsion polymerization process, of from about 1% to about 20%, preferably from about 5% to about 15% by weight and a melt viscosity of from about 1 to 35 kilopoise measured at 100 sec⁻¹ and 232°C. (ASTM D3835). Melt viscosity should be at the low end, 1 to 5, preferably 2 to 3 kilopoise, for highest gloss coatings and should be at the high end 20 to 35, preferably 20 to 25, more preferably from 21.5 to 23.5 kilopoise, for best crack and solvent resistance. Melt viscosities in the intermediate range provide a useful compromise of the properties exhibited by the polymers at the viscosity extremes.

Standard techniques well known in the art and not *per se* part of this invention may be used during polymerization to adjust the melt viscosity of the polymer resulting from the polymerization as well as its molecular weight distribution. For example, generally, the amount of chain transfer agent is increased to prepare polymers of lower melt viscosity and narrow molecular weight distribution.

The thermoplastic acrylic resins useful in the practice of the present invention serve to stabilize the coating. Suitable thermoplastic acrylic resins as coating stabilizers include, for example, any of the thermoplastic polymers of acrylic acid, methacrylic acid or esters of these acids. The esters are formed by the reaction of acrylic or methacrylic acid with suitable alcohols, for example, methyl alcohol, ethyl alcohol, propyl alcohol, butyl alcohol and 2-ethyl hexyl alcohol. Preferred thermoplastic acrylic polymers are homopolymers and copolymers of methyl methacrylate and higher alkyl methacrylate polymers. Particularly preferred are copolymers of methyl methacrylate and ethyl acrylate, such as ACRYLOID® B44 (Rohm and Haas Co., Philadelphia, PA).

Copolymers of methyl methacrylate may be formed from the polymerization of methyl methacrylate with a comonomer which makes up a minor proportion of the copolymer. Such copolymers of methyl methacrylate include, for example, the copolymers identified in U.S. Patent No. 3,253,060, namely polymers obtained by polymerizing methyl methacrylate with a minor proportion of comonomers such as ethyl methacrylate, propyl methacrylate, butyl methacrylate, ethyl acrylate, propyl acrylate, butyl acrylate, styrene, α-methyl styrene and methacrylic acid.

Thermosetting acrylic resins containing hydroxyl, amide, carboxylic acid, epoxy, silanol ether, as well as other reactive functionalities may also be utilized.

The thermoplastic acrylic resin component is responsible for certain highly desirable coating characteristics such as those disclosed in U.S. Patent 3,324,069 and U.S. Patent No. 3,340,222: less discoloration after a baking cycle which gives best adhesion and coalescence of the coating; less discoloration after exposure to high temperature use conditions; improved post-forming durability of the coating (i.e., resistance to damage by bending, pounding, abrading, etc.) after a baking cycle which gives the best adhesion and coalescence of the coating; and improved color, gloss and coating durability after exposure to weather. Improvement in discoloration resistance upon baking results from stabilization of the pigment component. Titanium dioxide, in particular, benefits from the stabilizing effect of the thermoplastic acrylic resin component.

The paint base or paint vehicle composition may be left unpigmented to form a varnish, or it may be mixed one or more pigments to form a paint. The same pigments useful in other PVDF based coatings may satisfactorily be used in the practice of the present invention. The pigments include, for example, those pigments identified in U.S. Patent No. 3,340,222. The pigment may be organic or inorganic. According to one embodiment, the pigment may comprise titanium dioxide, or titanium dioxide in combination with one or more other inorganic pigments wherein titanium dioxide comprises the major part of the combination. Inorganic pigments which may be used alone or in combination with titanium dioxide include, for example, silica, iron oxides of various colors, lead titanate, and various silicates, for example, talc, diatomaceous earth, asbestos, mica, clay, and basic lead silicate. Pigments which may be used in combination with titanium dioxide include, for example, zinc oxide, zinc sulfide, zirconium oxide, white lead, carbon black, lead chromate, leafing and non-leafing metallic pigments, molybdate orange, calcium carbonate and barium sulfate.

The preferred pigment category is the ceramic metal oxide type pigments which are calcined. Chromium oxides and some iron oxides of the calcined type may also be satisfactorily utilized. For applications where a white coating is desired, a non-chalking, non-yellowing rutile-type of titanium dioxide is recommended. Cadmium, lithopones and the like are inadequate as they suffer from lack of chalk resistance and/or inadequate hiding. Anastase TiO₂ is similarly not recommended.

The pigment component, when present, is advantageously present in the composition in the amount of from about 0.1 to about 50 parts by weight per 100 parts of resin component. While for most applications the preferred range is from about 25 to about 35 parts by weight pigment per 100 parts of resin component, for white and light colored pigment the amount of pigment is generally in the higher ranges of the preferred amount, and may be as high as 30 parts by weight per 100 parts of resin component or higher.

Clear metallic pigmented coats will have very low amount by weight pigment.

As paint bases or paint vehicles, the compositions of the invention will be in liquid form. The binder comprising the fluoropolymer resin and any optional other resins contained therein will be, dispersed, partially or completely dissolved in a thinner which may comprise either aqueous or non-aqueous based solvents. Such solvents may either be single solvents or mixtures of solvents. Suitable aqueous based solvents are described in U.S. Patent 4,128,519. Suitable non-aqueous based solvents are described in WO 93/13178 and U.S. Patent 3,324,069. The choice of solvents is not a critical feature herein and any conventional solvent or mixture of solvents including latent solvents conventionally employed in PVDF resin based paints is contemplated as suitable.

Other conventional paint components, such as surfactants, dispersants, waxes, crosslinking agents, UV absorbers, flatting agents, thickeners and the like may also be included in the paint base or paint vehicle and the paint and varnish compositions of the invention.

Standard techniques, well known to those of skill in the art, may be employed to mix the ingredients contained in the paint base or paint vehicle and the paint and varnish compositions contemplated by the present invention.

The paint and varnish compositions of this invention may be applied to a wide variety of substrates including plastics, wood, metals, ceramics, glass and the like by conventional coating methods, such as spraying, brushing, dipping, casting, knife coating, coil coating, reverse roll coating, draw down and other methods known in the art.

After application, solvent based paints and varnishes having the resins in solution are air-dried to remove the thinner, including the solvent, at ambient temperatures, 15° to 50° C, and other aqueous and non-aqueous solvent based paints and varnishes are baked or heated to evaporate the thinner, including the solvent, and coalesce the coating. The heating temperatures will range from about 125° to about 300° C, preferably from about 175° to about 275° C. Obviously for coating substrates sensitive to the higher temperature range, solvent based paints and varnishes having the resin totally dissolved should be employed.

Although adherence of the polymer film formed on drying the paint and varnish compositions to the substrate is normally more than adequate, increased adhesion may be obtained by first priming the substrate surface with a compatible coating layer. For example, for wood, a useful primer is a layer of pigmented acrylic acid ester polymer as described in U.S. Patent 3,234,039 and in U.S. patent 3,037,881. For metal coatings, for aqueous based paint and varnish compositions, a preferred primer layer is described in U.S. Patent 3,111,426 that is an epoxy based primer. More generally, acrylic based primers such as described in U.S. Patent 3,526,532 and the primers of U.S. Patent 4,179,542 based on mixtures of partially fluorinated halogenated ethylene polymers, epoxy resins, powdered metallic pigments and wet ground mica are also useful on metals. For coatings on glass, as well as glass cloth, glass fibers or other flexible substrates, woven or non-woven, known adhesion promoters may be used. In particular, glass fiber may first be treated with a silane coupling agent as described by I. L. Fan and R. G. Shaw, Rubber World, June 1971, page 56.

Air drying of the solvent based paints and varnishes of the invention having the resins in solution on substrates such as paper, glass fiber, glass cloth, and non-woven textiles may be accomplished at ambient temperatures with drying periods of from about 3 to 24 hours. However, with forced air drying at about 50° C. the films may dry in 10 to 15 minutes. At 60° C. about 5 to 10 minutes are adequate using forced air drying. After application, other aqueous and non-aqueous based systems are subjected to heat to evaporate the thinner, including the solvent, and subject the polymers to coalescence. As stated above, the heating temperatures will range from about 125° C. to about 300° C., preferably between about 175° C. and 275° C. and most preferably between about 215° C. and 250° C.

Alternatively, the paints and varnishes of the invention may be cast and subjected to heating to obtain a free film of the composition. We get coatings that are smooth, glossy, uniform and adhere tenaciously to the substrate. The films and coatings are also hard, creep resistant (that is dimensionally stable), flexible, chemically resistant and weather resistant. Smoke generation resistance and hydrophobicity are also provided by the films and coatings prepared in our work.

The following examples further illustrate good modes currently preferred for the practice of the invention, and should be considered as illustrative and not in limitation thereof.

### Examples

Paint and varnish formulations were prepared in varnish (unpigmented) form (A) and paint (pigmented) form (B) and (C) from the ingredients and in the proportions indicated:

| (A) | |
|---|---|
| Weight % | Ingredient |
| 24.5 | Fluoropolymer |
| 26.3 | ACRYLOID B44S (40% solids in toluene) (Rohm & Haas) |
| 49.2 | Isophorone |

| (B) | |
|---|---|
| Weight % | Ingredient |
| 20.5 | Fluoropolymer |
| 21.9 | ACRYLOID B44S (40% solids in toluene) |
| 15.8 | Ti-Pure® R-960* |
| 41.8 | Isophorone |

| | |
|---|---|
| *Rutile titanium dioxide supplied by DuPont | |

| (C) | |
|---|---|
| Weight % | Ingredient |
| 22.1 | Fluoropolymer |
| 23.6 | Acryloid B-44S (40% solids in toluene) |
| 13.5 | Cobalt Aluminum Spinel |
| 40.8 | Isophorone |

The formulations were prepared by ball milling all components except the fluoropolymer for 4 to 8 hours, splitting the mill base equally into portions to match the number of fluoropolymers being tested and adding the appropriate amount of fluoropolymer to each mill base portion. 4 mm. glass beads were added to each combined individual formulation sample in the amount of 1.25 times the total individual sample formulation weight.

The fluoropolymers tested were:
1. Vinylidene fluoride homopolymer (KYNAR 500® from Elf Atochem North America, Inc.)
2 . Vinylidene fluoride-hexafluoropropylene heterogeneous copolymer - melt viscosity 2.2 Kp.
3. Vinylidene fluoride-hexafluoropropylene random copolymer - melt viscosity = 6.0 Kp.
4. Vinylidene fluoride-hexafluoropropylene heterogeneous copolymer - melt viscosity 22.6 Kp.
5. High molecular weight vinylidene fluoride-hexafluoropropylene random copolymer (KYNAR FLEX® 2801 from Elf Atochem North America, Inc.)
6. Vinylidene fluoride homopolymer (KYNAR 500 PLUS™ from Elf Atochem North America, Inc.)

Dispersion Viscosities of Paint of Formulations B & C are given

**Table I:**

| Resin | Dispersion Viscosity (cps) | | | | | |
|---|---|---|---|---|---|---|
| | (B) White TiO₂ Dispersions | | | (C) Blue Co/Al Dispersions | | |
| | 6 rpm | 60 rpm | 6rpm | 6 rpm | 60 rpm | 6rpm |
| 1 | 325 | 203 | 325 | 3600 | 920 | 3600 |
| 2 | 650 | 378 | 575 | 1400 | 870 | 1300 |
| 3 | 1300 | 790 | 1200 | 6000 | 3850 | 6000 |
| 4 | 1300 | 870 | 1300 | 3100 | 1740 | 2900 |
| 5 | 725 | 485 | 725 | 1500 | 910 | 1500 |
| 6 | 250 | 140 | 250 | 4900 | 1080 | 4600 |

The coatings of formulation (A) were coated either by drawing on reflective steel substrates to observe clarity or on aluminum panels coated with a low gloss black KYNAR 500 based coating to observe gloss increase effects.

For crack testing, the coatings were coated by drawdown on unprimed chromate treated aluminum panels.

Quenched coatings were obtained by immersing the hot panels directly out of the bake oven into room temperature water.

Annealed coatings were obtained by heating the panel in an oven at the times and temperatures specified. Times up to 24 hours and temperatures up to 170° C. were used. The largest gloss increases were observed at annealing temperatures below the PVDF polymer or copolymer melting point (approximately 155° to 160° C. in this case). The rate of gloss increase also increases with the temperature up to the melting point of the PVDF (homo or copolymer).

Coatings prepared from Formulation A incorporating fluoropolymers 2 and 4 were clear when quenched, slow-cooled, or annealed. Coatings of Formulation A incorporating fluoropolymers 1 and 6 were clear when quenched but hazy when slow cooled or annealed.

When tested by x-ray photoelectron spectroscopy (XPS), coatings prepared from any of the formulations incorporating fluoropolymer 2 shows no change in surface composition following annealing. Coatings prepared from any of the formulations incorporating fluoropolymers 1 showed a decline of fluorine content at the surface following annealing.

The XPS results for quenched and annealed coatings from formula B using fluoropolymers 1 and 2 together with the theoretical O, C and F atomic % values calculated on fluoropolymer acrylic ratios in the original formulation are shown in Table 2.

**Table 2.**

| XPS Atomic Percentages and Calculated Fluoropolymer/Acrylic Ratios | | | | |
|---|---|---|---|---|
| | Atomic % | | | Calculated Fluoropolymer/Acrylic Ratio at Surface |
| Coating from Paint Formulation B Containing Fluoropolymer 1 or 2 | O | C | F | |
| Theoretical for 1 containting coating | 9.2 | 56.9 | 33.9 | 70/30 |
| XPS results for 1 containing quenched coating | 11.9 | 57.6 | 33.9 | 62/38 |
| XPS results for 1 containing annealed coating | 17.2 | 64.5 | 18.3 | 40/60 |
| Theoretical for 2 containing coating | 9.2 | 55.8 | 35.0 | 70/30 |
| XPS results for 2 containing quenched coating | 6.6 | 49.7 | 43.7 | 80/20 |
| XPS results for 2 containing annealed coating | 7.9 | 50.1 | 42.0 | 77/23 |

Coatings from paint formulation B containing fluoropolymer 6 exhibited analogous behaviors to those from formulation B containing fluoropolymer 1. Coatings containing fluoropolymers 3, 4 and 5 exhibited analogous behavior to those from formulation B containing fluoropolymer 2.

Coatings prepared as indicated above and cured as indicated for each of Tables 3, 4, 5 and 6 were prepared from formulations B (White) and C (Blue) and tested as indicated in tables 3, 4, 5 and 6. The results obtained for coatings prepared from the indicated formulations containing the fluoropolymer resin specified are shown in Tables 3, 4, 5 and 6.

**Table 3.**

| White Quenched Coatings | | | | | | |
|---|---|---|---|---|---|---|
| Fluoropolymer Resin | 1 | 2 | 3 | 4 | 5 | 6 |
| T-Bend Formability | 0T | 0T | 0T | 0T | 0T | 0T |
| MEK Rub Resistance (# of double runs) | 400 | 631 | 4 | 1800 | 8 | 1800 |
| 60° Gloss | 45 | 60 | 48 | 33 | 36 | 41 |
| Gouge Hardness | H | H | H | H | H | H |
| Metal Marking | Yes | Yes | Yes | Yes | Yes | Yes |

**Table 4.**

| White Annealed Coatings | | | | | | |
|---|---|---|---|---|---|---|
| Fluoropolymer Resin | 1 | 2 | 3 | 4 | 5 | 6 |
| T-Bend Formability | 2T | 2T | 0T | 0T | 0T | 4T |
| MEK Rub Resistance (# of double runs) | 2000 | 790 | 6 | >2500 | 12 | >2500 |
| 60° Gloss | 43 | 76 | 45 | 36 | 34 | 37 |
| Gouge Hardness | 2H | 2H | 2H | 2H | 2H | 2H |
| Metal Marking | Yes | No | Yes | Yes | Yes | Yes |

**Table 5.**

| Blue Quenched Coatings | | | | | | |
|---|---|---|---|---|---|---|
| Fluoropolymer Resin | 1 | 2 | 3 | 4 | 5 | 6 |
| T-Bend Formability | 0T | 0T | 0T | 0T | 0T | 0T |
| MEK Rub Resistance (# of double runs) | 1325 | 790 | 8 | 1760 | 2 | >2500 |
| 60° Gloss | 24 | 44 | 20 | 12 | 20 | 48 |
| Gouge Hardness | H | HB | HB | H | HB | H |

**Table 6.**

| Blue Quenched Coatings | | | | | | |
|---|---|---|---|---|---|---|
| Fluoropolymer Resin | 1 | 2 | 3 | 4 | 5 | 6 |
| T-Bend Formability | 3T | 2T | 0T | 0T | 0T | 2T |
| MEK Rub Resistance (# of double runs) | >2500 | 1209 | 6 | >2500 | 45 | >2500 |
| 60° Gloss | 25 | 73 | 25 | 16 | 29 | 44 |
| Gouge Hardeness | H | H | H | H | H | H |

T-Bend formability was determined according to ASTM D 4145-83 (Reapproved 1990) a Standard Test Method for Coating Flexibility of Prepainted Sheet. In this test, prepainted panels are bent 180° around progressively more thicknesses of metal or larger diameter dies, the end point being when failures no longer occur. The panels are examined at low magnification (5 to 10x) after each bend for fracture of the coating (cracking) and, for loss of adhesion pickoff, by means of a tape pull off test.

MEK (methyl ethyl ketone) rub resistance was determined according to National Coil Coaters Association (NCCA) Technical Bulletin No. II-18. This test is a Specification for Evaluation of Solvent Resistance by Solvent Rub Test. It provides a standardized procedure for rubbing a coated specimen wetted with solvent with a standard cloth in a uniform manner.

60° Gloss was determined according to ASTM D523-89 a Standard Test Method for Specular Gloss. This test measures the specular (mirror) reflectance from a reference in comparison to a black glass standard. The 60° angle is used for most specimens and was used for the specimen tests reported in this application.

Gouge hardness was determined according to ASTM D 3363-74 (Reapproved 1989), a Standard Test Method for Film Hardness by Pencil Test. In this test, a coated panel is placed on a firm horizontal surface. The pencil is held firmly against the film at a 45° angle (point away from the operator) and pushed away from the operator in a 1/4 in. (6.5 mm) stroke. The process is started with the hardest pencil and continued down the scale of hardness to the pencil that will not cut into or gouge the film (pencil hardness).

Adhesion and impact resistance were determined by a Standard Test Methods for Measuring Adhesion by Tape Test, by ASTM D 3359-90 and NCCA Technical Bulletin II-6, a Specification for Evaluation of Film Adhesion by "Cross Hatch" Tape Test After Reverse Impacting respectively. In the ASTM test, a lattice pattern with either six or eleven cuts in each direction is made in the film to the substrate, pressure sensitive tape is applied over the lattice and removed. In the NCCA Technical Bulletin II-6 test, the painted test sample is subjected to reverse impact force by the Gardner Variable Impact Tester using forces up to that required to rupture the substrate of the test specimen. Scotch adhesive tape #610 is applied to the deformed area, air bubbles are removed by rubbing and the specimen is allowed to set to return to room temperature (but no more than 10 minutes). The tape is removed with a quick pull at right angles to the test surface. None of the coatings showed adhesion loss and all coatings passed impact resistance tests up to the rupture limit of the aluminum substrate.

## Claims

1. A paint base which comprises in an amount of from 10% to 90% by weight of the dry resin content, a vinylidene fluoride-hexafluoropropylene copolymer resin comprising one or more discrete vinylidene fluoride-hexafluoropropylene copolymer domains and one or more discrete vinylidene fluoride homopolymer domains including a major vinylidene fluoride homopolymer domain which contains at least about 50% of the vinylidene fluoride content of the copolymer, said copolymer having a hexafluoropropylene content of from about 1% to about 20% by weight of the copolymer.

2. A paint base which comprises in an amount of from 10% to 90% by weight of the dry resin content, a vinylidene fluoride-hexafluoropropylene copolymer prepared by the emulsion polymerization of vinylidene fluoride and hexafluoropropylene in a stirred aqueous reaction medium comprising: (a) charging to a reactor: water, vinylidene fluoride, an initiator to start the polymerization, and a water soluble surfactant capable of emulsifying both the initiator and the reaction mass during the polymerization; (b) feeding additional amounts of vinylidene fluoride and initiator to continue polymerization of the vinylidene fluoride until from about 50% to about 90% of the total weight of vinylidene fluoride utilized in the process has been added to the reaction medium; (c) adding to the reaction medium for further polymerization (i) from about 1% to about 20% hexafluoropropylene by weight, based upon the combined weight of the hexafluoropropylene and the total weight of vinylidene fluoride added to the reaction medium in the process, and (ii) the balance of the vinylidene fluoride utilized in the process; and (d) obtaining vinylidene fluoride-hexafluoropropylene copolymer.

3. A paint base as defined in claim 1 or claim 2 additionally comprising at least one non-fluorinated resin.

4. A paint base as defined in claim 3 wherein the non-fluorinated resin is an acrylic resin.

5. A paint base of any one of the preceding claims wherein thinner in said paint base is substantially non-aqueous.

6. A paint base of any of claims 1 to 4 wherein thinner in said paint base is aqueous based.

7. A paint comprising a pigment mixed with a paint base as defined in any one of claims 1 to 6.

8. A coating derived by applying a paint as defined in claim 7 to a surface on which a coating is desired and evaporating the thinner of said paint.

9. A coating derived by applying a paint base as defined in any one of claims 1 to 6 as a varnish on a surface on which a coating is desired and evaporating the thinner of said paint base.

10. An article of manufacture comprising an article having adhered on at least one surface thereof a coating as defined in claim 8.

11. An article of manufacture comprising an article having adhered on at least one surface thereof a coating as defined in claim 9.
